# EUROPÄISCHE PATENTANMELDUNG

(11) **EP 2 065 316 A1**
(43) Veröffentlichungstag der Anmeldung: **03.06.2009**
(21) Anmeldenummer: 07405337.2
(22) Anmeldetag: 27.11.2007
(51) Int. Cl.: B65D 75/28, B32B 15/08, B65D 85/76, B32B 15/20

(54) **Folienverpackung**

(71) Anmelder: Alcan Technology & Management Ltd., 8212 Neuhausen am Rheinfall (CH)
(72) Erfinder: Pierron Eliane, 57400 Imling (FR); Cerf, Sabine, 57400 Sarrebourg (FR)

(57) **Zusammenfassung**

Eine Folienverpackung für weiche Nahrungsmittelmassen besteht aus einer zu einem offenen Behälter (13) geformten Behälterfolie und einer gegen die Behälterfolie gesiegelten, den Behälter (13) mit einem Deckel (16) verschliessenden Deckelfolie. Die Behälterfolie und die Deckelfolie sind mehrschichtig aufgebaut und eine der Schichten ist eine optional einseitig vorlackierte und ggf. bedruckte und überlackierte Aluminiumfolie. Die Aluminiumfolie der Behälterfolie und der Deckelfolie ist mit einem Polymer beschichtet, und auf der Polymerschicht der Behälterfolie ist eine Heisssiegelschicht angeordnet. Alternativ ist (a) auf der Aluminiumfolie der Deckelfolie auf der Siegelseite das optional mit Heisssiegellack beschichtete Polymer und auf der anderen Seite der Aluminiumfolie eine ggf. aus einem Polymer bestehende Korrosionsschutzschicht angeordnet, oder (b) die Aluminiumfolie der Deckelfolie auf der Siegelseite mit Heisssiegellack beschichtet und auf der anderen Seite der Aluminiumfolie die ggf. mit Heisssiegellack beschichtete Polymerschicht angeordnet.

## Beschreibung

Die Erfindung betrifft eine Folienverpackung für weiche Nahrungsmittelmassen, mit einer zu einem offenen Behälter geformten Behälterfolie mit einer Heisssiegelschicht und einer gegen die Behälterfolie gesiegelten, den Behälter mit einem Deckel verschliessenden Deckelfolie, wobei die Behälterfolie und die Deckelfolie mehrschichtig aufgebaut sind und eine der Schichten eine optional einseitig vorlackierte und ggf. bedruckte und überlackierte Aluminiumfolie ist.

Zur Verpackung von kleinen Portionen Weich- oder Schmelzkäse in der Form von Würfeln Dreiecken, Tetraedern und anderen, für die Verpackung kleiner Massen geeigneten Designs, wie sie etwa als Häppchen bei einem Apéro serviert werden, sind Folienverpackungen aus beschichteten Aluminiumfolien bekannt. Der Käse wird auf einer Abpackmaschine in schmelzflüssigem oder pastösem Zustand portionenweise in aus einer Behälterfolie geformte, oben offene Behälter gefüllt. Nach dem Auflegen von aus einer Deckelfolie geschnittenen Deckeln auf das Füllgut in den offenen Behältern erfolgt ein dichtes Verschliessen durch eine Heisssiegelung der Deckel gegen die Behälter entlang eines umlaufenden Streifens des nach innen gegen den Deckel umgelegten Behälterrandes.

Bisher wurden die für Folienverpackungen der vorstehend erwähnten Art verwendeten Aluminiumfolien zum Schutz gegen Korrosion und zur Verbesserung der Haftung von Siegellacken mit einem Grundlack oder Primer lackiert. Damit lässt sich jedoch eine optisch störende Oberflächenkorrosion der Aluminiumfolie infolge Migration korrosiv wirkender Bestandteile der Käsemasse durch die Lackschichten nicht in jedem Fall vermeiden.

Der Erfindung liegt die Aufgabe zugrunde, eine Folienverpackung der eingangs genannten Art zu schaffen, bei der die Aluminiumfolie wirksam gegen Korrosion geschützt ist und eine gute Haftung gegenüber Heisssiegellacken aufweist.

Zur erfindungsgemässen Lösung der Aufgabe führt, dass die Aluminiumfolie der Behälterfolie und der Deckelfolie mit einem Polymer beschichtet ist, wobei die Heisssiegelschicht auf der Polymerschicht der Behälterfolie angeordnet ist und alternativ
a) auf der Aluminiumfolie der Deckelfolie auf der Siegelseite das optional mit Heisssiegellack beschichtete Polymer und auf der anderen Seite der Aluminiumfolie eine ggf. aus einem Polymer bestehende Korrosionsschutzschicht angeordnet ist, oder
b) die Aluminiumfolie der Deckelfolie auf der Siegelseite mit Heisssiegellack beschichtet und auf der anderen Seite der Aluminiumfolie die ggf. mit Heisssiegellack beschichtete Polymerschicht angeordnet ist.

Die Polymerschicht ist bevorzugt eine lonomerschicht. Der wesentliche Vorteil der Ionomerschicht gegenüber einem herkömmlichen Primer auf Lackbasis liegt darin, dass sehr dünne Filme hergestellt werden können, die sich durch eine hohe mechanische Stabilität auszeichnen und die darunter liegende Aluminiumfolie wirksam gegen Korrosion schützen. Daneben bildet die dünne Ionomerschicht auf der Aluminiumfolie einen ausgezeichneten Haftgrund für Heisssiegelschichten.

Der Heisssiegellack ist zweckmässigerweise ein Niedertemperatur-Siegellack, d.h. ein Siegellack, der bereits bei Temperaturen ab z. B. 50 °C siegelt.

Die Aluminiumfolie der Behälterfolie und der Deckelfolie ist bevorzugt mit einem Flächengewicht von 1 bis 10 g/m², insbesondere 2 bis 8 g/ m², mit dem Polymer beschichtet.

Die Dicke der Aluminiumfolie der Behälterfolie und der Deckelfolie beträgt bevorzugt etwa 5 bis 15 µm, insbesondere 6 bis 12 µm.

Das Polymer ist bevorzugt ein Polyolefin, wie z.B. Polyethylen oder Polypropylen, oder ein Ionomer, z. B. ein Ethylen / Acrylsäure / Zink oder Natrium Ionomer oder ein Zinkacrylat Terionomer. Ein geeignetes lonomer ist das unter der Markenbezeichnung Surlyn 1857 bekannte Produkt.

Die erfindungsgemässe Folienverpackung eignet sich insbesondere zur Verpackung weicher Nahrungsmittelmassen, insbesondere in der Form eines Quaders bzw. Würfels. Geeignete weiche Nahrungsmittelmassen sind neben Weich- bzw. Schmelzkäse z.B. Bonbons.

Die Aluminiumfolie der erfindungsgemässen Folienverpackung weist ausgezeichnete, für Verpackungen der vorgenannten Art erforderliche Dead Fold Eigenschaften auf.

Die erfindungsgemässe Folienverpackung kann zusätzlich mit aus dem Stand der Technik bekannten Öffnungshilfen, wie z. B. Aufreissstreifen- oder -fäden, oder durch Orientierung der Folie in Aufreissrichtung, ausgestattet sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: eine Schrägsicht auf eine würfelförmige Folienverpackung;
- Fig. 2: einen senkrechten Schnitt durch die Folienverpackung von Fig. 1 nach deren Line I-I mit einer ersten Ausführungsform eines Deckels;
- Fig. 3: einen senkrechten Schnitt durch die Folienverpackung von Fig. 1 nach deren Line I-I mit einer zweiten Ausführungsform eines Deckels;
- Fig. 4: einen Querschnitt durch die Behälterfolie der Folienverpackung von Fig. 2;
- Fig. 5 - 8: einen Querschnitt durch verschiedene Ausführungsformen von Deckelfolien für die Behälterfolie von Fig. 4;
- Fig. 9: einen Querschnitt durch die Behälterfolie der Folienverpackung von Fig. 3;
- Fig. 10: einen Querschnitt durch eine Deckelfolie für die Behälterfolie von Fig. 9.

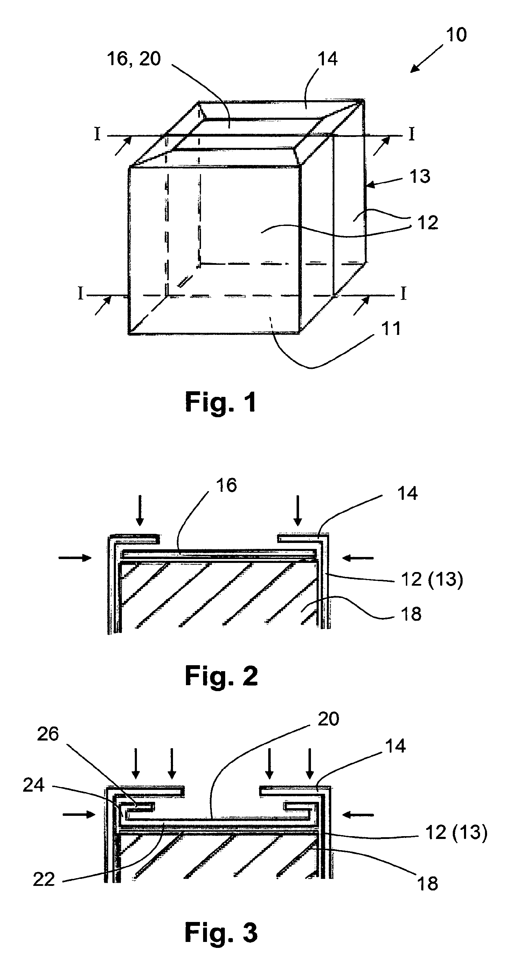

Eine in Fig. 1 dargestellte würfelförmige Folienverpackung 10 für weiche Füllgutmassen 18, wie z. B. Schmelz- oder Weichkäse in der Form von Apérowürfeln, umfasst einen Behälter 13 mit einer Bodenfläche 11 mit von dieser aufragenden Seitenwänden 12, deren freie Ränder unter Bildung eines umlaufenden Siegelrandes 14 um einen Winkel von 90° nach innen umgelegt sind. Von der Innenseite der Verpackung ist ein Deckel 16, 20 gegen den Siegelrand 14 heiss gesiegelt.

Die in Fig. 2 dargestellte Folienverpackung 10 weist einen Deckel 16 mit ungefalteter, ebener quadratischer Deckfläche auf. Die mit Pfeilen dargestellte Heisssiegelung des Deckels 16 gegen den Siegelrand 14 des Behälters 13 erfolgt mit entsprechenden Siegelwerkzeugen von oben und von der Seite Seiten gegen die Füllgutmasse 18, die vorgängig in flüssiger Form in die auf einer Verpackungsmaschine aus einer Behälterfolie 30 vorgeformten, oben offenen Behälter 13 portioniert eingefüllt wird.

Grundsätzlich ist es möglich, durch geeignete Wahl eines auf die Einfülltemperatur des Füllgutes abgestimmten Niedertemperatur-Siegellackes eine Siegelung durch die beim Abfüllen heisse Füllgutmasse 18 ohne Siegelwerkzeug bereits bei einer Füllguttemperatur ab etwa 50 °C zu erreichen.

Bei der in Fig. 3 gezeigten Ausführungsform einer Folienverpackung 10 weist der Deckel 20 eine quadratische Basisfläche 22 mit zweimal um einen Winkel von 90° nach oben und innen umgelegten Rändern mit nach innen gerichteten Schnittkanten 23 auf, so sich dass zu den Seitenwänden 12 des Behälters 13 parallele Seitenflächen 24 und zum Siegelrand 14 des Behälters 13 parallele Siegelflächen 26 ergeben. Wie im Beispiel von Fig. 2 erfolgt die mit Pfeilen dargestellte Heisssiegelung des Deckels 20 gegen den Siegelrand 14 des Behälters 13 mit entsprechenden Siegelwerkzeugen von oben und von der Seite Seiten gegen die Füllgutmasse 18, die vorgängig in flüssiger Form in die auf einer Verpackungsmaschine aus einer Behälterfolie 30 vorgeformten, oben offenen Behälter 13 portioniert eingefüllt wird.

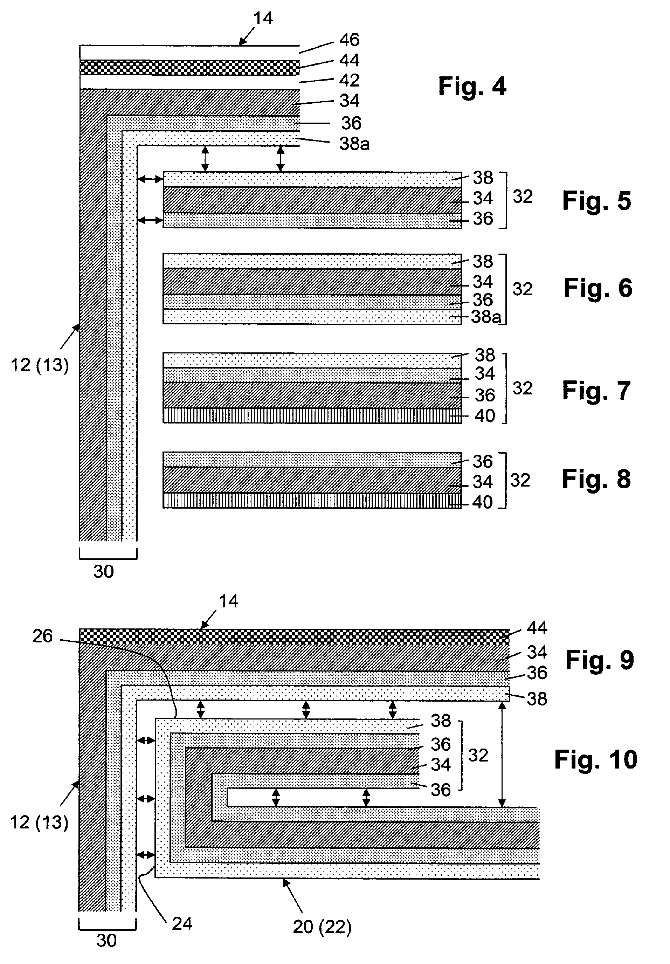

Eine in Fig. 4 gezeigte Behälterfolie 30 mit einer Aluminiumfolie 34 weist auf der bei der Folienverpackung 10 nach aussen gerichteten Seite der Aluminiumfolie 34 nacheinander eine Vorlackschicht 42, eine Bedruckung 44 und eine aussenseitige Schutzlackschicht 46 auf.

Auf der gegen die Füllgutmasse 18 gerichteten Siegelseite ist die Aluminiumfolie 34 mit einem durch Extrusionsbeschichten aufgetragenen lonomer 36 beschichtet. Die lonomerschicht 36 dient hier sowohl als Primer für eine Niedertemperatur-Heisssiegelschicht 38a als auch als Korrosionsschutzschicht.

Eine erste zur Herstellung des Deckels 16 verwendete Deckelfolie 32 weist gemäss Fig. 5 eine Aluminiumfolie 34 auf, deren Siegelseite mit einem Heisssiegellack 38 beschichtet ist. Die gegen die Füllgutmasse 18 gerichtete Seite der Aluminiumfolie 34 ist mit einem durch Extrusionsbeschichten aufgetragenen lonomer 36 beschichtet. Die Ionomerschicht 36 übernimmt hier die Funktion einer Korrosionsschutzschicht.

Bei einer Kombination der Behälterfolie 30 von Fig. 4 und der Deckelfolie 32 von Fig. 5 erfolgt die Siegelung im Bereich der Siegelränder 14 zwischen der Niedertemperatur-Heisssiegelschicht 38a der Behälterfolie 30 und der Heisssiegelschicht 38 der Deckelfolie 32.

Eine zweite zur Herstellung des Deckels 16 verwendete Deckelfolie 32 weist gemäss Fig. 6 eine Aluminiumfolie 34 auf, deren Siegelseite mit einem Heisssiegellack 38 beschichtet ist Die gegen die Füllgutmasse 18 gerichtete Seite der Aluminiumfolie 34 ist mit einem durch Extrusionsbeschichten aufgetragenen lonomer 36 beschichtet. Die lonomerschicht 36 dient hier als Primer für eine Niedertemperatur-Heisssiegelschicht 38a und als Korrosionsschutzschicht.

Bei einer Kombination der Behälterfolie 30 von Fig. 4 und der Deckelfolie 32 von Fig. 6 erfolgt die Siegelung im Bereich der Siegelränder 14 zwischen der Niedertemperatur-Heisssiegelschicht 38a der Behälterfolie 30 und der Heisssiegelschicht 38 der Deckelfolie 32. Eine weitere Siegelung erfolgt zwischen der Niedertemperatur-Heisssiegelschicht 38a der Behälterfolie 30 und der Niedertemperatur-Heisssiegelschicht 38a der Deckelfolie 32 im Bereich der Seitenwände 12 des Behälters 13. Die Siegeltemperatur liegt bei einem Niedertemperatur-Heisssiegellack je nach Zusammensetzung zwischen etwa 50° und 120°C.

Eine dritte zur Herstellung des Deckels 16 verwendete Deckelfolie 32 weist gemäss Fig. 7 eine Aluminiumfolie 34 auf, deren Siegelseite mit einem durch Extrusionsbeschichten aufgetragenen Ionomer 36 beschichtet ist. Die lonomerschicht 36 dient hier als Primer für eine Heisssiegelschicht 38. Die gegen die Füllgutmasse 18 gerichtete Seite der Aluminiumfolie ist mit einer konventionellen Korrosionsschutzschicht 40 versehen.

Bei einer Kombination der Behälterfolie 30 von Fig. 4 und der Deckelfolie 32 von Fig. 7 erfolgt die Siegelung im Bereich der Siegelränder 14 zwischen der Niedertemperatur-Heisssiegelschicht 38a der Behälterfolie 30 und der Heisssiegelschicht 38 der Deckelfolie 32.

Eine vierte zur Herstellung des Deckels 16 verwendete Deckelfolie 32 weist gemäss Fig. 8 eine Aluminiumfolie 34 auf, deren Siegelseite mit einem durch Extrusionsbeschichten aufgetragenen lonomer 36 beschichtet ist. Die gegen die Füllgutmasse 18 gerichtete Seite der Aluminiumfolie ist mit einem konventionellen Korrosionsschutzlack 40 beschichtet.

Bei einer Kombination der Behälterfolie 30 von Fig. 4 und der Deckelfolie 32 von Fig. 7 erfolgt die Siegelung im Bereich der Siegelränder 14 zwischen der Niedertemperatur-Heisssiegelschicht 38a der Behälterfolie 30 und der Ionomerschicht 36 der Deckelfolie 32.

Eine weitere in Fig. 9 gezeigte Behälterfolie 30 mit einer Aluminiumfolie 34 weist auf der bei der Folienverpackung 10 nach aussen gerichteten Seite der Aluminiumfolie 34 eine Bedruckung 44 auf.

Auf der gegen die Füllgutmasse 18 gerichteten Siegelseite ist die Aluminiumfolie 34 mit einem durch Extrusionsbeschichten aufgetragenen lonomer 36 beschichtet. Die lonomerschicht 36 dient hier als Primer für eine Heisssiegelschicht 38.

Eine zur Herstellung des Deckels 20 verwendete Deckelfolie 32 weist gemäss Fig. 10 eine Aluminiumfolie 34 auf, die auf der gegen die Füllgutmasse 18 gerichteten Seite mit einem durch Extrusionsbeschichten aufgetragenen lonomer 36 als Primer für einen Heisssiegellack 38 beschichtet ist. Durch die zweimal um einen Winkel von 90° nach oben und innen umgelegten Ränder des Deckels 20 bildet die mit dem Heisssiegellack 38 beschichtete Seite die gegen die Behälterfolie 30 gerichteten Siegelflächen 26. Auf der gegen das Füllgut 18 gerichteten Seite der Deckelfolie 32 übernimmt die lonomerschicht 36 zusätzlich die Funktion einer Korrosionsschutzschicht.

Bei einer Kombination der Behälterfolie 30 von Fig. 9 und der Deckelfolie 32 von Fig. 10 erfolgt die Siegelung im Bereich der Siegelflächen 26 und der Seitenflächen 24 des Deckels 20 zwischen der Heisssiegelschicht 38 der Behälterfolie 30 und der Heisssiegelschicht 38 der Deckelfolie 32. Eine weitere Siegelung erfolgt zwischen der lonomerschicht 36 des die Siegelflächen 26 bildenden, umgelegten Randes und der Ionomerschicht der darunter liegenden Basisfläche 22 des Deckels 20, sowie zwischen der Heisssiegelschicht 38 der Behälterfolie 30 und der lonomerschicht 36 der darunter liegenden Deckelschicht 32 in dem die Siegelflächen 26 des Deckels 20 überragenden Bereich des Siegelrandes 14 des Behälters 13.

In den Beispielen der Fig. 4 bis 8 liegt die Dicke der Aluminiumfolie bevorzugt etwa zwischen 5 und 9 µm, insbesondere zwischen etwa 6 und 8 µm, und in den Beispielen der Fig. 9 und 10 bevorzugt zwischen etwa 9 und 15 µm, insbesondere zwischen etwa 11 und 13 µm. Die Dicke der Ionomerschicht 36 hat in allen Beispielen ein bevorzugtes Flächengewicht von etwa 1 - 10 g/m², insbesondere etwa 2 - 8 g/m².

Anstelle einer Extrusionsbeschichtung kann die lonomerschicht 36 auch in der Form einer wässrigen Emulsion auf die Aluminiumfolie 34 aufgetragen und nachfolgend zur Filmformung bei einer Temperatur von etwa 80° getrocknet werden. Ein geeignetes lonomer ist beispielsweise Surlyn 1857.

Zur Herstellung der Heisssiegelschicht 38 können beispielsweise Heisssiegellacke auf Acrylat- oder Vinylacetatbasis eingesetzt werden.

## Patentansprüche

1. Folienverpackung für weiche Nahrungsmittelmassen, mit einer zu einem offenen Behälter (13) geformten Behälterfolie (30) mit einer Heisssiegelschicht (38) und einer gegen die Heisssiegelschicht (38) der Behälterfolie (30) gesiegelten, den Behälter (13) mit einem Deckel (16,20) verschliessenden Deckelfolie (32), wobei die Behälterfolie (30) und die Deckelfolie (32) mehrschichtig aufgebaut sind und eine der Schichten eine optional einseitig vorlackierte und ggf. bedruckte und überlackierte Aluminiumfolie (34) ist,
**dadurch gekennzeichnet, dass**
die Aluminiumfolie (34) der Behälterfolie (30) und der Deckelfolie (32) mit einem Polymer (36) beschichtet ist, wobei die Heisssiegelschicht (38) auf der Polymerschicht (36) der Behälterfolie (30) angeordnet ist und alternativ
a) auf der Aluminiumfolie (34) der Deckelfolie (32) auf der Siegelseite das optional mit Heisssiegellack (38) beschichtete Polymer (36) und auf der anderen Seite der Aluminiumfolie (34) eine ggf. aus einem Polymer bestehende Korrosionsschutzschicht (40) angeordnet ist, oder
b) die Aluminiumfolie (34) der Deckelfolie (32) auf der Siegelseite mit Heisssiegellack (38) beschichtet und auf der anderen Seite der Aluminiumfolie (34) die ggf. mit Heisssiegellack (38) beschichtete Polymerschicht (36) angeordnet ist.

2. Folienverpackung nach Anspruch 1, **dadurch gekennzeichnet, dass** die Aluminiumfolie (34) der Behälterfolie (30) und der Deckelfolie (32) eine Dicke von 5 bis 15 µm, vorzugsweise 6 bis 12 µm, aufweist.

3. Folienverpackung nach Anspruch 1 oder 2, **dadurch gekennzeichnet, dass** die Aluminiumfolie (34) der Behälterfolie (30) und der Deckelfolie (32) mit einem Flächengewicht von 1 bis 10 g/m², vorzugsweise 2 bis 8 g/m², mit dem Polymer (36) beschichtet ist.

4. Folienverpackung nach einem der Ansprüche 1 bis 3, **dadurch gekennzeichnet, dass** das Polymer (36) ein Polyolefin, insbesondere ein Polyethylen oder ein Polypropylen, ist.

5. Folienverpackung nach einem der Ansprüche 1 bis 3, **dadurch gekennzeichnet, dass** das Polymer (36) ein lonomer ist.

6. Folienverpackung nach einem der Ansprüche 1 bis 5, **dadurch gekennzeichnet, dass** der Heisssiegellack (38) ein Niedertemperatur-Siegellack ist.
